Europäisches Patentamt

(19) European Patent Office

Office européen des brevets

(11) Publication number: **0 023 838**
**B2**

(12) **NEW EUROPEAN PATENT SPECIFICATION**

(45) Date of publication of the new patent specification: **21.09.88**

(51) Int. Cl.⁴: **F 25 J 3/08,** F 25 J 3/06, C 01 B 3/50

(21) Application number: **80302670.7**

(22) Date of filing: **05.08.80**

(54) Separation of gas mixtures.

(30) Priority: **06.08.79 US 64232**

(43) Date of publication of application: **11.02.81 Bulletin 81/06**

(45) Publication of the grant of the patent: **16.05.84 Bulletin 84/20**

(45) Mention of the opposition decision: **21.09.88 Bulletin 88/38**

(84) Designated Contracting States: **BE DE FR GB IT NL**

(56) References cited:
FR-A-1 379 201
GB-A-1 057 020
GB-A-1 136 040
GB-A-1 509 789
US-A-2 582 068

**Sonderdruck aus Winnacker-Küchler, Chem. Technologie, Vol.1, 1958, Carl Hansa Verlag, München, pages 421-424**

(73) Proprietor: **AIR PRODUCTS AND CHEMICALS, INC.**
**P.O. Box 538**
**Allentown, Pennsylvania 18105 (US)**

(72) Inventor: **Rowles, Howard Charles**
**62 Darby Street**
**Center Valley Pennsylvania 18034 (US)**
Inventor: **Woodward, Donald Winston**
**Box 26 RD 1**
**New Tripoli Pennsylvania 18066 (US)**

(74) Representative: **Lucas, Brian Ronald**
**Lucas, George & Co. 135 Westhall Road**
**Warlingham Surrey CR3 9HJ (GB)**

## Description

This invention relates to a method for recovering methane rich fuel from a multicomponent feed gas mixture comprising hydrogen, methane and at least one gas selected from the group consisting of nitrogen, argon and carbon monoxide.

Many industrial produce waste gases containing hydrogen, methane and one or more of nitrogen, argon and carbon monoxide. Frequently, such waste gases are simply burned. This is extremely wasteful since hydrogen is a particularly valuable gas and the nitrogen and/or argon adds nothing to the heating ability of the waste gases. Various processes have been devised to recover hydrogen rich and methane rich fractions from such waste gases using a partial condenser. One example of such a process is described in US Patent No. 3,675,434. However, the methane recovered is generally accompanied by a substantial quantity of nitrogen and/or argon which reduces the heating value of the gas. Thus, typically, if about 20% of the methane in the original waste gas is recovered, the heating value of the methane rich fuel is usually of the order of 5342 Kcal/m$^3$, (600 Btu/scf). (Pure methane = 8903 Kcal/m$^3$ (1,010 Btu/scf). Similarly, if 82% of the methane contained in the original waste gas is recovered, the methane rich fuel typically has a heating value of about 2938 Kcal/m$^3$ (330 Btu/scf) (at 21°C).

GB—A—1,136,040 describes a process in which a multicomponent mixture comprising, by volume, 69% hydrogen, 23% nitrogen, 2.7% argon and 5.3% methane is first cooled to 85°K (−188°C) in a heat exchanger. The greater part of the methane, together with some argon and nitrogen condenses and is removed in a phase separator. The hydrogen is then separated from the remaining nitrogen and argon in a dephlegmator. It should be noted that the high methane recovery is accompanied by nitrogen and argon and that the resulting fuel will have a relatively low heating value.

US—A—2,582,068 discloses the concept of separating a mixture of methane and hydrogen by condensation and separation in a dephlegmator. However, the specification does not address the problems when a further component such as nitrogen and/or argon and/or carbon dioxide is also present in the mixture.

GB—A—1,509,589 discloses the use of a dephlegmator to separate a multicomponent mixture into a stream comprising hydrogen and methane and another stream comprising ethylene and ethane.

Winnacker-Küchler, Chemical Technology, Vol. 1, 1958 pages 421—424 discloses a process in which coke oven feed gas containing (by volume) 56% hydrogen, 6% nitrogen, 6% carbon monoxide and 29.6% methane is cooled and fed to a nitrogen evaporator where part of the feed gas is liquified. The methane rich liquid fraction leaving the nitrogen evaporator contains the major portion of the nitrogen originally present in the feed.

It will be seen that whilst the prior art could separate methane from a multicomponent mixture comprising hydrogen, methane and at least one gas from the group consisting of nitrogen, argon and carbon monoxide, it could not achieve the joint criteria of high methane recovery and high heating value. It is the object of at least preferred embodiments of the present invention to achieve these criteria. As will be described hereinafter, in at least preferred embodiments of the present invention about 80% of the methane content of the waste gas can be recovered at heating values of the order of 5342 Kcal/m$^3$ (600 Btu/scf) and over 99% of the methane can be recovered at heating values of the order of 2938 Kcal/m$^3$ (330 Btu/scf). Such enhanced recovery of methane results from the rectification taking place in the dephlegmator.

According to the present invention there is provided a method for recovering a methane-rich fuel from a multicomponent feed gas mixture comprising hydrogen, methane, and at least one gas from the group consisting of nitrogen, argon and carbon monoxide, which method comprises:

(a) introducing the feed gas mixture at superatmospheric pressure into a feed cooling zone in indirect heat exchange with cooler product stream(s);

(b) precooling the feed gas mixture in said feed cooling zone to a temperature near its dew point or sufficient to condense a minor portion of said feed gas mixture;

(c) flowing gas from said feed cooling zone upwardly through a number of passages in a dephlegmation zone in indirect heat exchange with refrigerant supplied to said passages, whereby said gas is caused to partially condense on the walls of said passages forming a reflux liquid; and

(d) withdrawing liquid from said dephlegmation zone characterized in that

interaction take place between the upwardly flowing gas stream and the stream of cool downwardly flowing liquid condensate, in a manner such that the liquid withdrawn from said dephlegmation zone is rich in methane and the major portion of said hydrogen and said at least one gas leaves said dephlegmation zone as uncondensed vapor;

and further characterised in that said method comprises:

(e) introducing uncondensed vapor from said dephlegmation zone into a condensing zone wherein the uncondensed vapor is cooled to a temperature sufficient to condense a portion thereof;

(f) withdrawing from said condensing zone a mixed vapor-liquid stream;

(g) separating said mixed vapor-liquid stream to provide a vapor portion comprising a hydrogen-rich stream and a liquid portion;

(h) passing said vapor portion through said condensing zone and said dephlegmation zone as additional coolant;

(i) passing said additional coolant from said dephlegmation zone through said feed cooling zone in indirect heat exchange with said feed gas mixture;

(j) withdrawing the thus warmed gas as hydrogen rich gas product; and

(k) expanding the liquid portion from step (g) and introducing the expanded portion into said condensing zone for cooling the uncondensed vapors introduced into said condensing zone from said dephlegmation zone.

Preferably, the uncondensed vapors from said dephlegmation zone are expanded and a portion returned to said dephlegmation zone for use as a refrigerant therein.

Advantageously, the uncondensed vapor from said dephlegmation zone is essentially free of methane.

Preferably, the methane-rich fuel has a heating value of at least 2671 Kcal/m$^3$ (300 Btu/scf) and contains at least 80% of the methane present in the initial feed mixture.

For a better understanding of the invention and to show how the same may be carried into effect, reference will now be made, by way of example, to the accompanying drawings in which:

Figure 1 is a simplified schematic flow sheet of a plant in which the method of the present invention can be carried out; and

Figure 2 is a graph.

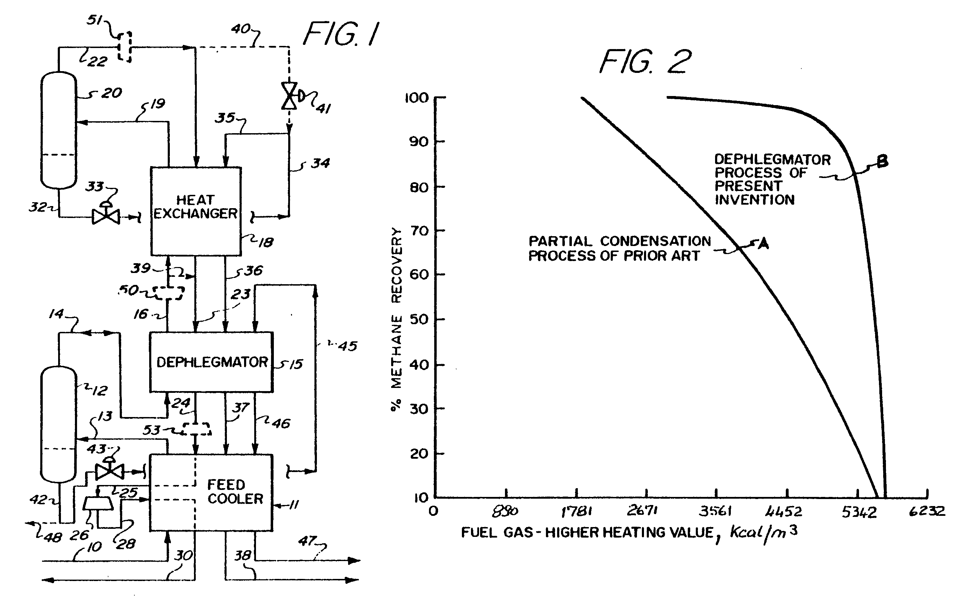

Referring to Figure 1, a multicomponent feed gas mixture comprising hydrogen, nitrogen, methane and argon is passed through line 10 into a feed cooler 11 wherein it is either cooled to a temperature near its dew point or alternatively partially condensed. It is then passed through line 13 to a separator 12. The vapor fraction from separator 12 is introduced by line 14 into dephlegmator 15, wherein it is further cooled by heat exchange to condense most of the remaining methane and part of the nitrogen and argon.

In the dephlegmator 15 the vapor flows upwardly through a plurality of indirect heat exchange passages (not shown) through which the refrigerants, hereinafter described, are passed at several temperature levels. As the vapor stream introduced into the dephlegmator by line 14 is cooled, some of the mixture condenses on the walls of the passages forming a reflux liquid that flows downward. Thus, interaction takes place between the upwardly flowing gas stream and the downwardly flowing stream of cooler liquid. Rectification results, wherein the gaseous mixture discharged overhead from the dephlegmator 15 is enriched in hydrogen and the liquid leaving the dephlegmator through line 14 is enriched in methane.

The liquid stream produced in the dephlegmator runs down line 14 at a temperature ordinarily below that of the vapor introduced into separator 12 in line 13. It will be noted that line 14 is the same line through which the vapor stream leaves separator 12, as indicated by the double-headed arrow on that line. In separator 12 the liquid from the dephlegmator is mixed with any liquid from feed cooler 11.

The condensed vapor leaving the dephlegmator by overhead line 16, is introduced into a condensing zone comprising heat exchanger 18, for further cooling to a temperature effecting partial condensation of residual nitrogen and argon including any remaining methane. The obtained vapor-liquid mixture from heat exchanger 18 is withdrawn by line 19 and is introduced into separator 20.

From separator 20, the overhead gaseous stream comprising about 75% (by moles) hydrogen is withdrawn by line 22 and returned to heat exchanger 18 for heat exchange with the warmer vapor stream introduced by line 16. The gas thus warmed in the heat exchanger 18 is then passed via line 23 into and through the dephlegmator 15 where it serves as one of the coolants. Leaving the dephlegmator by line 24, the gas is further employed as a coolant in feed cooler 11. As shown, the gas from line 24 leaving the upper level of the feed cooler 11 by line 25 is expanded in expander 26 with accompanying cooling. The work expanded gas, at its thus lowered temperature, is returned to a lower level of feed cooler 11 by line 28 for further use in cooling the feed gas from line 10, and is then discharged through line 30.

The liquid phase from separator 20 is discharged through line 32, and expanded through expansion valve 33 with consequent further reduction in temperature. It is then passed by lines 34 and 35, through heat exchanger 18 where it serves as the principal coolant. Leaving heat exchanger 18, the product from line 35 is passed, in turn, via lines 36 and 37 respectively, through the dephlegmator 15 and feed cooler 11, to serve as coolant in these, and is discharged from feed cooler 11 by line 38. The discharged gas stream in line 38 is composed chiefly of nitrogen and argon, being substantially free of methane (generally less than 1%) and containing a small amount of unremoved hydrogen.

Various modifications to the method described are envisaged. For example, recovery of a separate inert gas stream, via line 38, is optional.

If a product of higher hydrogen purity is desired to be recovered in line 30 (as up to 95% or higher hydrogen content), this may be accomplished by splitting off a part of the gas in line 22, as shown by dotted line 40 and expansion valve 41, and combining the split off portion with the stream entering heat exchanger 18 through line 35. In this way colder temperatures may be achieved in the heat exchanger 18 and consequently higher hydrogen purity in the separator 20.

The condensed methane-enriched liquid fraction is discharged from separator 12 through line 42, expanded as indicated through valve 43, and the thus cooled expanded product passed to an upper level of dephlegmator 15 by line 45 to serve as a coolant in the dephlegmator. Leaving the dephlegmator via line 46, the methane-enriched product is passed by line 46 into and through feed cooler 11, from which it is discharged by line 47 as a methane rich fuel gas of high heating value. The methane rich fuel gas generally will contain over 95% of the methane initially present in the feed gas which entered the plant through line 10. Alternatively, the condensed methane-enriched liquid fraction may be withdrawn through line 48 without serving as a coolant in dephlegmator 15 and feed cooler 11.

If a methane rich fuel gas of higher heating value is desired, this can be accomplished by operation under selected conditions of pressure and temperature such that a smaller amount of the inert gases are carried over in the liquid fraction withdrawn from separator 12. In doing so, however, lower methane recovery is attained as seen from the graph in Figure 2.

Referring to the graph in Figure 2, curve A is that obtained by a partial condensation process plotting the percent recovery of methane against the higher heating value (HHV) of the recovered fuel gas. Curve B is the corresponding curve obtained when employing the dephlegmator operation alone in Figure 1. The compared curves are based on treatment of a gas feed at 18.6 bars A (270 psia) composed of: 40 mole % hydrogen, 46.7% nitrogen, 3.4% argon and 9.9% methane. Comparing the two curves it will be seen that at a fuel gas HHV of 2938 Kcal/m$^3$ (330 Btu/scf) only about 82% of the methane is recovered using partial condensation as compared to almost 100% recovery by the dephlegmator process. At a fuel gas HHV of 5342 Kcal/m$^3$ (600 Btu/scf), only about 20% of the methane is recovered using partial condensation as compared to about 80% when using a dephlegmator.

An example of process conditions is set out below for a feed gas mixture comprising:

|  | mole% |
| --- | --- |
| hydrogen | 52 |
| nitrogen and argon | 43 |
| methane | 5 |

The gas mixture of the recited composition was obtained by mixing ammonia-freed purge gas from an ammonia synthesis plant with another hydrogen-rich off gas of lower hydrogen content.

The feed gas is introduced into feed cooler 11 at 7.2°C (45°F) and at a pressure of 28.27 bars A (410 psia). In feed cooler 11, the feed gas is cooled to about −152°C (−242°F) which is slightly above its dew point, and introduced through line 13 into separator 12 at pressure of about 27.58 bars A (400 psia). The gaseous overhead fraction from separator 12 is passed through line 14 to the dephlegmator 15, wherein it is further cooled by exchange with cooler process streams, to about −172°C (−277°F). The methane-enriched product which condenses within the dephlegmator is returned to separator 12 through line 14.

The uncondensed vapor leaving the dephlegmator via line 16 contains less than 1% methane. It is passed through heat exchanger 18 wherein it is further cooled to about −180°C (−293°F) thereby effecting condensation of nitrogen and argon therein. The obtained vapor-liquid mixture leaving heat exchanger 18 via line 19 is separated at 20. The overhead vapor fraction in line 22 is composed principally of hydrogen together with uncondensed nitrogen and argon.

The coolant streams employed for refrigeration in heat exchanger 18 include the overhead vapor in line 22 as well as the liquid bottoms from separator 20. The latter, withdrawn from separator 20 by line 32, is expanded to about 2.2 bars A (32 psia) through valve 33 resulting in further cooling the same to about −191°C (−312°F) at which temperature and pressure it is passed via lines 34 and 35 through heat exchanger 18 in indirect heat exchange with the warmer stream passed through 18 via line 16. The coolants leaving heat exchanger 18 via lines 23 and 36 will each be about −178°C (−289°F) and these are further employed for cooling the warmer gas entering the dephlegmator via line 14. These coolant streams leave the dephlegmator via lines 24 and 37 at about −160°C (−256°F).

Refrigeration in the dephlegmator is also obtained by use of the liquid fraction from separator 12. This fraction, leaving the separator by line 42, is expanded through valve 43 to 2.9 bars A (42 psia) and is introduced as coolant in the dephlegmator via line 45 at about −182°C (−295°F).

The initial cooling of the feed gas in feed cooler 11 is effected with several colder process streams. The hydrogen rich stream in line 24, which enters the upper part of feed cooler 11 at −160°C (−256°F) is warmed by such exchange to about −52°C (−125°F). Leaving the upper part of the heat exchanger via line 25, this gas stream will be at a pressure of about 27 bars A (391 psia). It is then expanded in the turbine 26 to about 22.5 bars A (327 psia) and thereby cooled to about −94°C (−138°F) in which condition it is returned, via line 28, to a lower level of feed cooler 11 for further indirect heat exchange, leaving the system via line 30 at about 2°C (36°F) and at a pressure of about 22.4 bars A (325 psia). The hydrogen rich gas stream, discharged through line 30, contains about 76% by volume H$_2$ (97% hydrogen recovery) and the balance almost entirely composed of nitrogen and argon, may be returned as recycle gas to an ammonia synthesis system or may be utilized as a hydrogenation gas in other desired applications.

The coolant stream introduced into feed cooler 11 by line 37, leaves that exchanger by line 38 as a vent gas at about 1.72 bars A (25 psia). This vent gas will be composed of about 93% nitrogen and argon and will contain about 6% hydrogen, with less than 1% methane.

The coolant introduced into feed cooler 11 via line 46 leaves the exchanger by line 47 at a pressure of about 2.62 bars A (38 psia). In the operation of the present example, the obtained fuel gas is one having a heating value of 2938 Kcal/m$^3$ (330 Btu/scf) and comprises 32% methane, 64% nitrogen and argon, and about 4% hydrogen. The gas contains about 97% of the methane present in the feed gas charged through line 10.

While in the illustrated preferred embodiment, part of the cooling of the feed gas is supplied by work expansion of the returning hydrogen-enriched fraction, it is also within the scope of the invention to employ other methods for furnishing the required levels of cooling for the desired separation of the different fractions. Thus, instead of work expansion to lower fluid temperature, an external refrigerant might be employed to supply part of the required refrigeration for all or part of the feed gas. The refrigeration might also be introduced at colder temperature levels, such as into the uncondensed vapor leaving the dephlegmator in line 16 or the partially condensed vapor leaving the heat exchanger 18 in line 19. Work-expansion refrigeration might also be derived at other locations in the process, such as on the uncondensed vapor in line 16 through expander 50, or on the hydrogen-enriched gas in line 22 through expander 51, or in line 24 through expander 53.

In another embodiment of the present invention, a methane, hydrogen, carbon monoxide gas mixture is separated to remove methane and also to adjust the hydrogen to carbon monoxide ratio to make a more suitable feed gas for methanol synthesis. Typical gasifier off-gases from coal and oil gasification processes comprise (in mole percent) about 40 to 60% hydrogen, 30 to 50% carbon monoxide, and 5 to 20% methane, after pre-separation of other minor components such as carbon dioxide and water.

In the flow diagram of Figure 1, the gasifier off-gas is processed in the same manner as that described above in connection with the ammonia synthesis purge gas. Methane is first condensed in the dephlegmator 15, separated in phase separator 12, and recovered via line 47 at a concentration of about 30 to 60% as desired, with the remainder being primarily carbon monoxide. If necessary, additional carbon monoxide can be condensed in the heat exchanger 18 to yield a 66% hydrogen, 33% carbon monoxide vapor overhead product in separator 20. This hydrogen enriched mixture, recovered via line 30, containing hydrogen and carbon monoxide in a 2 to 1 mole ratio, and containing only a trace of methane, is a desirable feed gas for methanol synthesis. Excess carbon monoxide, containing minor amounts of hydrogen and methane is recovered from the bottom liquid of separator 20 via line 38.

**Claims**

1. A method for recovering a methane-rich fuel from a multicomponent feed gas mixture comprising hydrogen, methane, and at least one gas from the group consisting of nitrogen, argon and carbon monoxide, which method comprises:

(a) introducing the feed gas mixture at superatmospheric pressure into a feed cooling zone (11) in indirect heat exchange with cooler product stream(s);

(b) precooling the feed gas mixture in said feed cooling zone (11) to a temperature near its dew point or sufficient to condense a minor portion of said feed gas mixture;

(c) flowing gas from said feed cooling zone (11) upwardly through a number of passages in a dephlegmation zone (15) in indirect heat-exchange with refrigerant supplied to said passages, whereby said gas is caused to partially condense on the walls of said passages forming a reflux liquid; and

(d) withdrawing liquid from said dephlegmation zone (15); characterized in that

interaction take place between the upwardly flowing gas stream and the stream of cool downwardly flowing liquid condensate, in a manner such that the liquid withdrawn from said dephlegmation zone is rich in methane and the major portion of said hydrogen and said at least one gas leaves said dephlegmation zone (15) as uncondensed vapor;

and further characterised in that said method comprises:

(e) introducing uncondensed vapor from said dephlegmation zone (15) into a condensing zone (18) wherein the uncondensed vapor is cooled to a temperature sufficient to condense a portion thereof;

(f) withdrawing from said condensing zone (18) a mixed vapor-liquid stream;

(g) separating said mixed vapor-liquid stream to provide a vapor portion comprising a hydrogen-rich stream and a liquid portion;

(h) passing said vapor portion through said condensing zone and said dephlegmation zone (15) as additional coolant;

(i) passing said additional coolant from said dephlegmation zone (15) through said feed cooling zone (11) in indirect heat exchange with said feed gas mixture;

(j) withdrawing the thus warmed gas as hydrogen rich gas product; and

(k) expanding the liquid portion from step (g) and introducing the expanded portion into said condensing zone (18) for cooling the uncondensed vapors introduced into said condensing zone from said dephlegmation zone (15).

2. A method according to Claim 1, wherein the uncondensed vapors from said dephlegmation zone (15) are expanded and a portion returned to said dephlegmation zone (15) for use as a refrigerant therein.

3. A method according to Claim 2, wherein the uncondensed vapor from said dephlegmation zone (15) is essentially free of methane.

4. Use of the method according to any preceding Claim for obtaining methane-rich fuel having a heating value of at least 2671 Kcal/m$^3$ (300 Btu/scf) and containing at least 80% of the methane present in the initial multicomponent feed gas mixture.

## Patentansprüche

1. Verfahren zur Gewinnung eines methanreichen Brennstoffes aus einer Zufuhr einer Mehrkomponentengasmischung, die Wasserstoff, Methan und zumindest ein Gas aus der Gruppe umfaßt, die aus Stickstoff, Argon und Kohlenmonoxid besteht, wobei dieses Verfahren umfaßt:

a) Einführen der Gasmischungszufuhr bei Überdruck in eine Abkühlzone (11) für die Zufuhr in indirektem Wärmeaustausch mit dem (den) Produktstrom (Produktströmen) des Kühlers,

b) Vorkühlen der Gasmischungszufuhr in der Abkühlzone (11) für die Zufuhr auf eine Temperatur in der Nähe ihres Taupunktes oder auf eine ausreichende Temperatur, um einen geringen Teil der Gasmischungszufuhr zu kondensieren,

c) Strömen dieses Gases aus der Abkühlzone (11) für die Zufuhr nach oben durch eine Anzahl von Durchgängen in eine Konzentrierungszone (15) in indirektem Wärmeaustausch mit einem diesen Durchgängen zugeführten Kältemittel, wodurch ein teilweises Kondensieren des Gases auf den Wänden der Durchgänge hervorgerufen wird, wobei eine Rückflußflüssigkeit gebildet wird und

d) Abziehen dieser Flüssigkeit aus der Konzentrationszone (15),

dadurch gekennzeichnet daß zwischen dem nach oben strömenden Gasstrom und dem Strom des kalten nach unten fließenden flüssigen Kondensats eine Wechselwirkung in der Weise stattfindet, daß die Flüssigkeit, die aus der Konzentrationszone abgezogen wird, reich an Methan ist, und der Hauptanteil des Wasserstoffs und des zumindest einen Gases, die Konzentrationszone (15) als nicht kondensierter Dampf verläßt,

und weiterhin dadurch gekennzeichnet, daß dieses Verfahren umfaßt:

e) Einführen des nicht kondensierten Dampfes aus der Konzentrationszone (15) in eine Kondensationszone (18), worin der nicht kondensierte Dampf auf eine ausreichende Temperatur abgekühlt wird, um einen Teil davon zu kondensieren,

f) Abziehen eines gemischten Stromes aus Dampf/Flüssigkeit aus der Kondensationszone (18),

g) Trennen dieses gemischten Stromes aus Dampf/Flüssigkeit, um einen Dampfanteil, der einen wasserstoffreichen Strom umfaßt, und einen flüssigen Anteil zu schaffen,

h) Leiten des Dampfanteiles durch die Kondensationszone (18) und die Konzentrationszone (15), als zusätzliches Kältemittel,

i) Leiten dieses zusätzlichen Kältemittels aus der Konzentrationszone (15) durch die Abkühlzone (11) für die Zufuhr in indirektem Wärmeaustausch mit der Gasmischungszufuhr,

j) Abziehen des so erwärmten Gases als wasserstoffreiches Gasprodukt und

k) Expandieren des flüssigen Anteiles vom Schritt (g) und Einführen dieses expandierten Anteiles in die Kondensationzone (18) zum Abkühlen der nicht kondensierten Dämpfe, die aus der Konzentrationszone (15) in diese Kondensationszone eingeführt werden.

2. Verfahren nach Anspruch 1, worin die nicht kondensierten Dämpfe aus der Konzentrationszone (15) expandiert werden und ein Teil zur Verwendung als Kältemittel zur Konzentrationszone (15) zurückgeführt wird.

3. Verfahren nach Anspruch 2, worin der nicht kondensierte Dampf aus der Konzentrationszone (15) im wesentlichen frei von Methan ist.

4. Verwendung des Verfahrens nach einem der vorstehenden Ansprüche zum Erhalt eines methanreichen Brennstoffes, der einen Heizwert von mindestens 2671 Kcal/m$^3$ (300 Btu/scf) aufweist und mindestens 80% des Methans enthält, das in der ursprünglichen Zufuhr der Mehrkomponentengasmischung vorhanden war.

## Revendications

1. Procédé destiné à récupérer un combustible riche en méthane à partir d'un mélange de gaz d'alimentation à plusieurs constituants comprenant de l'hydrogènne, du méthane, et au moins un gaz du groupe comprenant l'azote, l'argon et le monoxyde de carbone, procédé qui comprend:

(a) l'introduction du mélange de gaz d'alimentation à la pression superatmosphérique dans une zone de refroidissement en échange de chaleur indirect avec un ou des courant(s) des produits refroidisseurs;

(b) le prérefroidissement du mélange de gaz d'alimentation dans la zone de refroidissement de l'alimentation (11), à une température voisine de son point de rosée ou suffisante pour condenser une petite partie du mélange de gaz d'alimentation;

(c) l'écoulement du gaz de la zone (11) de refroidissement de l'alimentation vers le haut à travers un certain nombre de passages dans une zone de déphlegmation (15) en échange de chaleur indirect avec un réfrigérant fourni auxdits passages, tandis que ledit gaz est amené à se condenser partiellement sur les parois desdits passages en formant un liquide de reflux; et

(d) l'extraction du liquide de ladite zone de déphlegmation (15);

caractérisé en ce que une interaction a lieu entre le courant gazeux ascendant et le courant de condensat liquide froid s'écoulant vers le bas, d'une façon telle que le liquide extrait de la zone du déphlegmateur est riche en méthane et que la majeure partie de l'hydrogène et d'au moins un des gaz quitte la zone de déphlegmation (15) sous forme de vapeur non condensée;

et de plus caractérisé en ce que le procédé comprend:

(e) l'introduction de la vapeur non condensée à partir la zone de déphlegmation (15) dans une zone de condensation (18) dans lequel la vapeur non condensée est refroidie jusqu'à une température suffisante pour condenser une partie de celle-ci;

(f) l'extraction à partir de la zone de condensation (18) d'un courant vapeur-liquide mixte;

(g) la séparation du courant vapeur-liquide mixte pour fournir une partie de vapeur comprenant un courant riche en hydrogène et une partie liquide;

(h) faire passer la partie vapeur à travers la zone de condensation (18) et la zone de déphlegmation (15) en tant que réfrigérant supplémentaire;

(i) faire passer le réfrigérant supplémentaire depuis la zone de déphlegmation (15) à travers la zone de refroidissement de l'alimentation (11) en échange de chaleur indirect avec le mélange de gaz d'alimentation;

(j) l'extraction du gaz ainsi chauffé sous forme de produits gazeux riches en hydrogène; et

(k) la détente de la partie liquide obtenue à l'étape (g) et l'introduction la partie détendue dans la zone de condensation (18) pour refroidir les vapeurs non condensés introduites dans la zone de condensation à partir de la zone de déphlegmation (15).

2. Procédé selon la revendication 1, dans lequel les vapeurs non condensées de la zone de déphlegmation (15) sont détendues et une partie est renvoyée à la zone de déphlegmation 15 pour être utilisée comme agent réfrigérant.

3. Procédé selon la revendication 2, dans lequel la vapeur non condensée de la zone de déphlegmation (15) est essentiellement exempte de méthane.

4. Utilisation du procédé selon l'une quelconque des revendications précédentes pour l'obtention d'un combustible riche en méthane ayant une valeur calorifique d'au moins 2671 Kcal/m$^3$ (300 Btu/scf) et contenant au moins 80% du méthane présent dans le mélange de gaz d'alimentation à plusieurs constituants.

FIG. 1

FIG. 2

HEAT EXCHANGER

DEPHLEGMATOR

FEED COOLER

51
22
40
20
19
35
41
34
33
32
18
39
36
50
16
23
45
14
15
12
13
24
37
46
53
43
42
25
48 26
10 28
30
38
47
11

% METHANE RECOVERY

100
90
80
70
60
50
40
30
20
10

DEPHLEGMATOR PROCESS OF PRESENT INVENTION

B

PARTIAL CONDENSATION PROCESS OF PRIOR ART

A

0    890    1781    2671    3561    4452    5342    6232

FUEL GAS - HIGHER HEATING VALUE, Kcal/m³

0 023 838